# EUROPEAN PATENT SPECIFICATION

(11) **EP 4 588 695 B1**
(45) Date of publication and mention of the grant of the patent: **27.05.2026**
(21) Application number: 24382047.9
(22) Date of filing: 18.01.2024
(51) Int. Cl.: B60G 7/02

(54) **CHASSIS COMPONENT WITH ECCENTRIC STOP**
FAHRWERKSBAUTEIL MIT EXZENTERANSCHLAG
COMPOSANT DE CHÂSSIS AVEC BUTÉE EXCENTRIQUE

(43) Date of publication of application: 23.07.2025
(73) Proprietor: Autotech Engineering S.L., 48340 Amorebieta-Etxano (ES)
(72) Inventor: KROLO, Mario, 33803 Steinhagen (DE)
(74) Representative: Cohausz & Florack

(56) References cited:
- DE-U1- 202019 105 455
- US-A1- 2013 193 660

## Description

The invention relates to a chassis component for a motor vehicle, for example as an add-on part, according to the preamble of claim 1.

Chassis components of this type, such as rear axle carriers, in particular cross members of such axle carriers, are provided with means for adjusting the track and camber of the vehicle wheels on the mountings for connecting control arms, such as spring links and track rods. Said means usually comprise an eccentric disc which is connected in a torsionally rigid manner to the connecting bolt used to connect the control arm, whereby the eccentric disc is assigned a stop against which it rolls or slides when the connecting bolt is adjusted in order to set the track and camber.

In the prior art, the stop for the eccentric disc is realized by at least one welded-on additional element, e.g. in the form of parallel, spaced-apart square steel profiles or a U-shaped steel part or by slotted openings (see e.g. DE 20 2019 105 455 U1, Fig. 1; and US 2013/0193660 A1, Figures 3 and 7). However, these known solutions are not satisfactory. This is because welding on two square steel profiles arranged parallel and at a distance from each other is time-consuming and difficult or error-prone with regard to precise alignment of the square steel profiles relative to each other. In the case of an eccentric stop, which is realized by welding on a U-shaped steel part, the legs of the steel part are already aligned with each other, but the problem with such an eccentric stop is that it is exposed to a high risk of corrosion from water and salt.

With the slotted openings, there is a particular problem of unintentional crack formation or crack propagation in the base material of the chassis component. Furthermore, the effort required to comply with the maximum permissible tolerances with regard to the shape and dimensions of the slotted openings is relatively high. In addition, during assembly of the connecting bolts, namely when tightening the screw connection, the slotted openings may be pressed in, so that the stop function is lost.

Proceeding from the above, the present invention was based on the object of creating a chassis component of the type mentioned at the beginning, whose eccentric stop is characterized by a lower risk of corrosion and can be manufactured cost-effectively without the risk of crack formation.

This object is solved by a chassis component with the features of claim 1. Preferred and advantageous embodiments of the chassis component according to the invention are stated in the subclaims.

The chassis component according to the invention comprises a mount which has at least one oblong hole for receiving a connecting bolt for connecting a control arm and at least one stop for an eccentric disc which is connected or can be connected in a torsionally rigid manner to the connecting bolt, wherein the stop is formed from a metal part, preferably a one-piece metal part, which is produced separately from the mount and which is connected to the mount and has at least two spaced-apart attachment portions and a connecting portion connecting the attachment portions to one another, wherein the or at least two of the attachment portions define stop surfaces for the eccentric disc. The suspension component according to the invention is characterized in that the connecting portion is formed relative to the attachment portions, preferably angled or offset, so that the connecting portion is at least partially spaced relative to the mount.

The stop or the corresponding metal part can also be referred to as an eccentric stop. The functional surfaces serving as stop surfaces for the eccentric disc preferably face each other, with the respective functional surface forming an angle of approximately 90° to 135° with the surface of the mount.

The forming or bending of the connecting portion relative to the contact portions of the metal part (eccentric stop) and the resulting spacing of the connecting portion relative to the mount reduces the contact surface of the metal part on the mount and thus significantly reduces the risk of corrosion on the eccentric stop. This is particularly advantageous with regard to the connection of spring control arms, as spring control arms are usually mounted at low points on the wheel suspension, where the eccentric stops associated with the spring control arms are subjected to high loads from water and salt, particularly in winter.

The connecting portion is preferably angled or offset relative to the attachment portions of the metal part by forming operation.

Furthermore, the design of the eccentric stop according to the invention results in additional installation space under the formed (reshaped), for example angled or offset connecting portion for a connection of another component, for example a track rod bracket, to be connected to the mount.

Accordingly, an advantageous embodiment of the chassis component according to the invention provides that the connecting portion of the metal part (eccentric stop) engages over another component, preferably a metal part, connected to the mount.

A further embodiment of the chassis component according to the invention is characterized in that the connecting portion has at least partially a distance relative to the mount which is greater than the thickness of the metal part, preferably at least 1.5 times, particularly preferably at least 2 times the thickness of the metal part. In this way, the reduction of the contact surface of the metal part on the mount can be largely reliably ensured, since a loss of the distance provided for in the invention due to dirt deposits that sometimes occur, which bridge the distance or close a corresponding gap, can hardly be effective in this embodiment.

The metal part defining the eccentric stop according to the invention is preferably essentially U-shaped, with the attachment portions being defined by legs of the U-shaped metal part. The correspondingly designed eccentric stop can be manufactured in a simple and cost-effective manner.

The attachment portions of the metal part are preferably elongated; they may therefore also be referred to as elongated attachment portions of a one-piece metal part. Accordingly, the connecting portion connecting the attachment portions of the metal part to each other may also be referred to as a portion of the metal part connecting the elongate attachment portions of a one-piece metal part to each other.

A further embodiment of the invention provides that the connecting portion is single-angled relative to the attachment portions, preferably elongated attachment portions. In this embodiment, the angled portion defines a tapered or wedge-shaped gap with the mount. A corresponding bending of the connecting portion or the metal part can be realized in a way that is gentle on the material and without the risk of crack formation.

According to a preferred embodiment, the latter can be achieved in particular if the angled connecting portion defines an obtuse angle with the attachment portions, which is in the range from 130° to 175°, preferably in the range from 140° to 160°.

Alternatively, another embodiment of the invention provides that the connecting portion defines with the attachment portions an acute angle which is in the range of 5° to 25°, preferably in the range of 8° to 15°.

According to a further embodiment of the invention, it is provided that the angled connecting portion has a flat surface on its side facing away from the mount, which is connected to the surfaces of the attachment portions facing away from the mount via curved regions of the metal part. The radius of curvature of the curved areas of the metal part (eccentric stop) is, for example, in the range of 2.5 to 6 times the thickness or average thickness of the metal part or said attachment portions.

Another advantageous embodiment of the invention is characterized in that the metal part (serving as an eccentric stop) is cranked, so that the connecting portion is at least partially offset relative to the attachment portions. A correspondingly designed eccentric stop distinguishes by a comparatively small space requirement with reduced risk of corrosion.

According to a preferred further development, the latter can be achieved in particular if the connecting portion is offset parallel or at least partially parallel relative to the attachment portions. Alternatively, the connecting portion can also be offset at a slant angle or at least partially at a slant angle relative to the attachment portions.

According to a further advantageous embodiment of the invention, the attachment portions of the metal part rest with contact on the mount, so that at least two contact surfaces are present, wherein the connecting portion connecting the attachment portions has an underside free surface at least partially facing the mount, which is greater than the sum of the contact surfaces. The relatively small sum of the contact surfaces results in a correspondingly reduced risk of corrosion for the eccentric stop, which can also be quickly aligned and reliably fastened to the mount.

A further advantageous embodiment of the invention is characterized in that the respective attachment portion of the metal part has a width or average width that is at least twice, preferably at least three times, greater than the thickness of the metal part. This allows the bending stiffness of the eccentric stop to be optimized with low weight or low weight increase of the same.

According to a further advantageous embodiment of the invention, the attachment portions of the metal part are connected to the mount by fillet weld seams, the fillet weld seams being arranged on edges of the attachment portions facing away from each other. This design favors a particularly compact and stable design of the eccentric stop. In particular, it is advantageous if the respective fillet weld seam is no longer than the maximum width of the oblong hole, whereby the long axis of the oblong hole defines a straight reference line in the alignment of which the fillet weld seams lie, and whereby the fillet weld seams preferably lie between tangents of the oblong hole running parallel to the long axis. This makes it possible to achieve a stress-reduced or homogenized force transmission at the eccentric stop into the mount assigned to the eccentric stop.

As an alternative to fillet welding, the eccentric stop according to the invention can also be connected to the add-on part, for example a cross member, by means of another welding, for example by resistance welding, in particular projection welding. A further advantageous embodiment of the invention provides that the metal part connected to the mount has a coating produced by cathodic dip painting, the coating having been produced after the metal part has been connected to the bracket. This additionally reduces the risk of corrosion on the eccentric stop. In this case, the cathodic dip coating is preferably an extended cathodic dip coating.

According to a further advantageous embodiment of the invention, the connecting portion, which is angled or offset relative to the attachment portions, has a fastening structure, for example in the form of a lug or eyelet, the fastening structure preferably being provided with a fastening opening, for example a fastening hole. The fastening structure can be formed at any point on the connecting portion. Preferably, the fastening structure or the fastening opening is located in a central length range or arc length range of the connecting portion. The fastening structure or fastening opening is used to fix or connect a fastening means for fastening one or more lines and is designed accordingly. The fastening means can be, for example, a mount, a clip, an expanding rivet or a rivet nut. A line to be fastened to the fastening means can, for example, be a pneumatic, hydraulic or electrical line. In this embodiment, the eccentric stop according to the invention has a multiple function.

In the following, the invention will be explained in more detail with reference to drawings illustrating examples of embodiments, in which drawings:

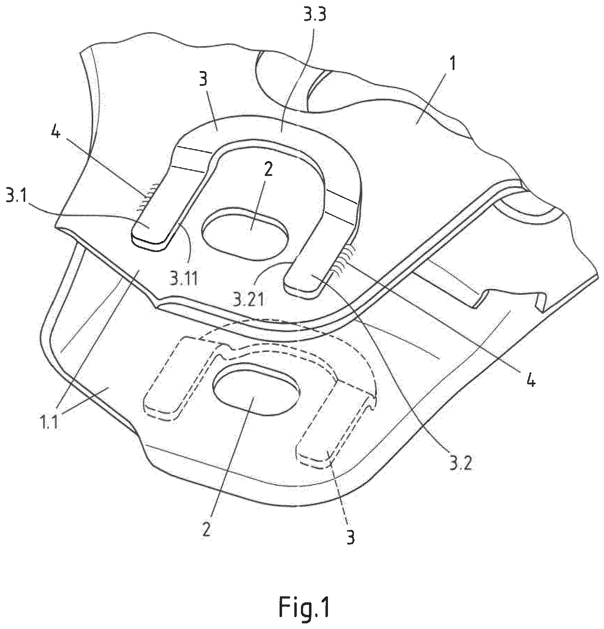

Fig. 1 is a perspective view of a section of a chassis component with an eccentric stop according to the invention attached to it;

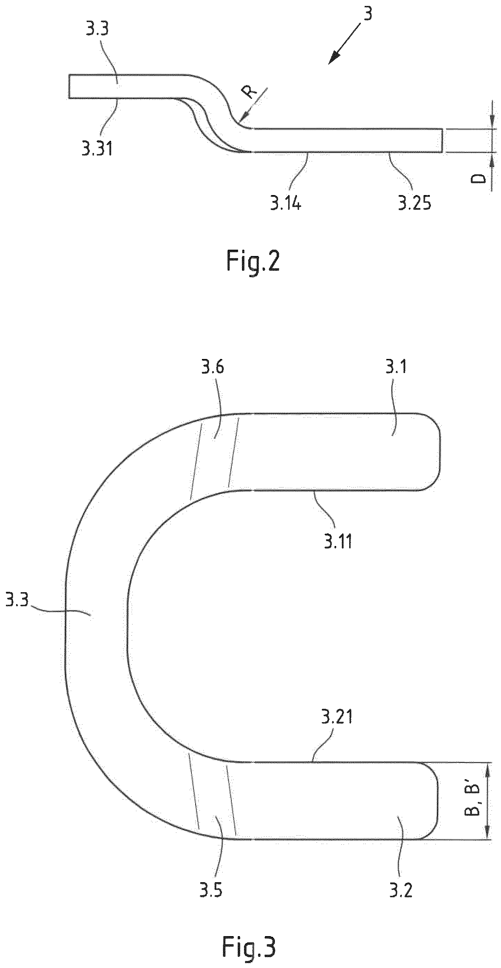

Figs. 2 and 3 show the eccentric stop from Fig. 1, which is manufactured separately from the chassis component, in a side view and top view respectively;

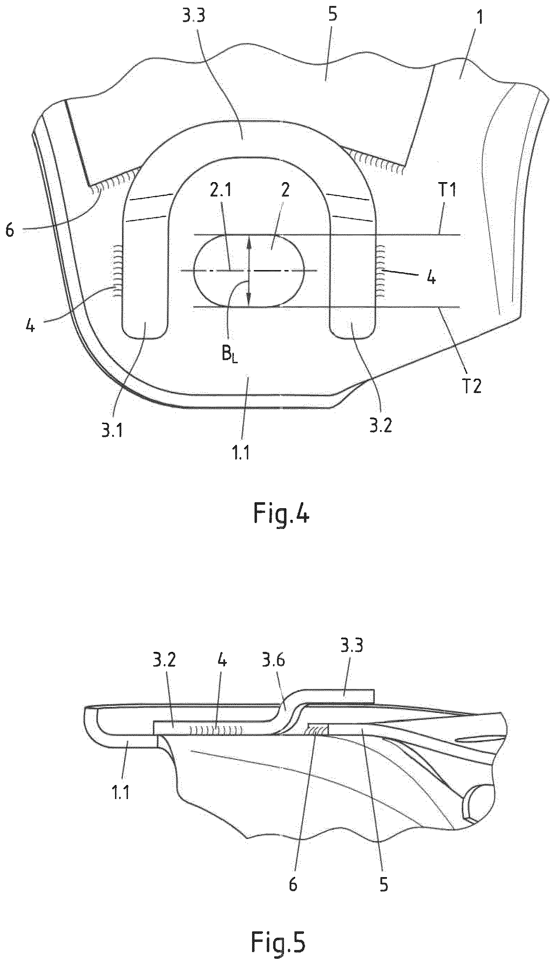

Figs. 4 and 5 is a top view and in a side view, respectively, of a section of a chassis component with an eccentric stop according to the invention attached thereto, which engages over another component connected to the chassis component;

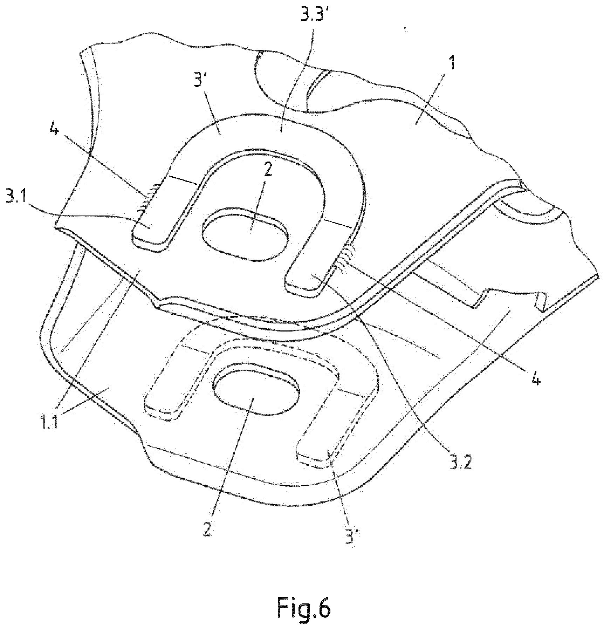

Fig. 6 is a perspective view of a section of a chassis component with an eccentric stop attached thereto according to a further embodiment of the invention;

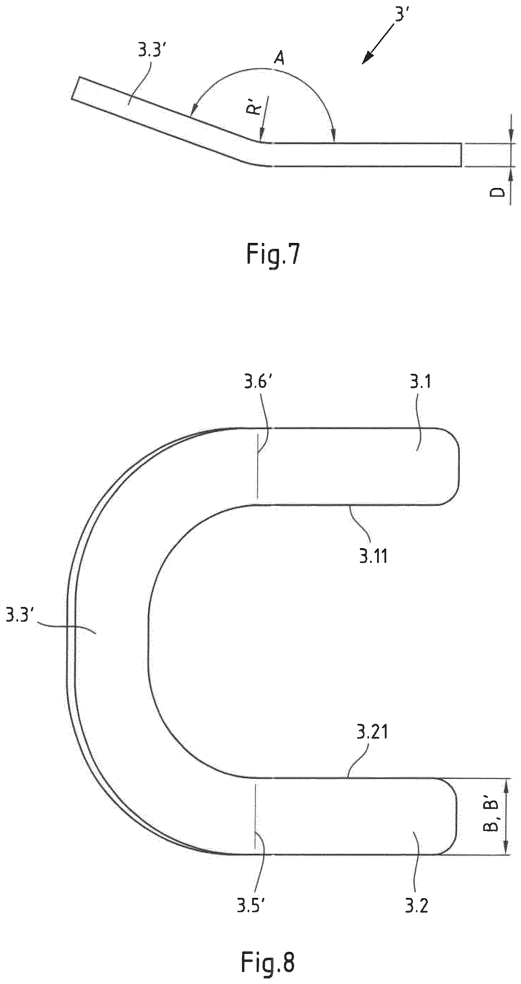

Figs. 7 and 8 is a side view and in top view, respectively, of the eccentric stop of Fig. 6, which is manufactured separately from the chassis component;

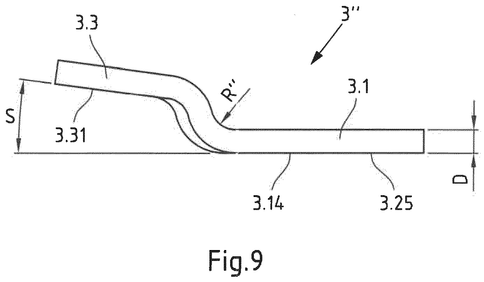

Fig. 9 a side view of an eccentric stop according to the invention, manufactured separately from a chassis component, similar to the eccentric stop shown in Figures 1 to 3;

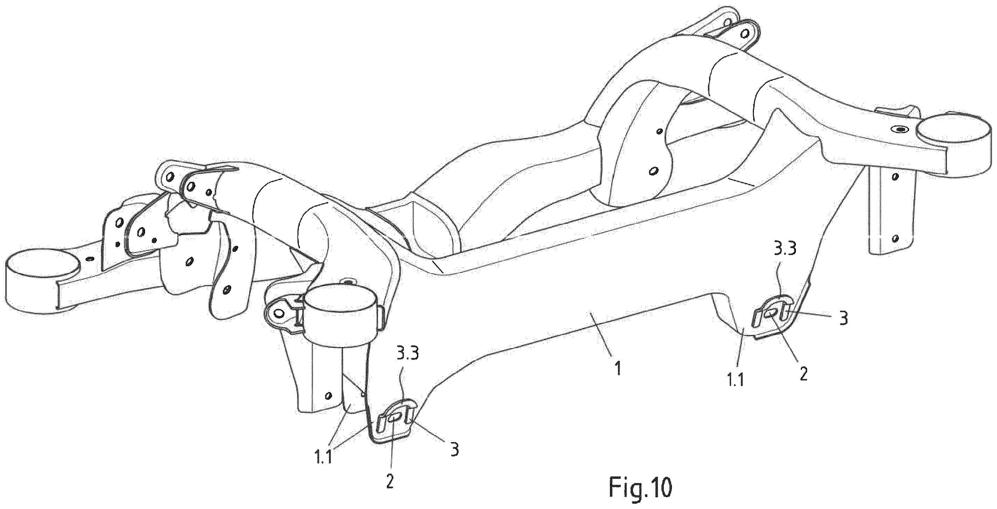

Fig. 10 is a perspective view of a subframe comprising a cross member with eccentric stops according to the invention;

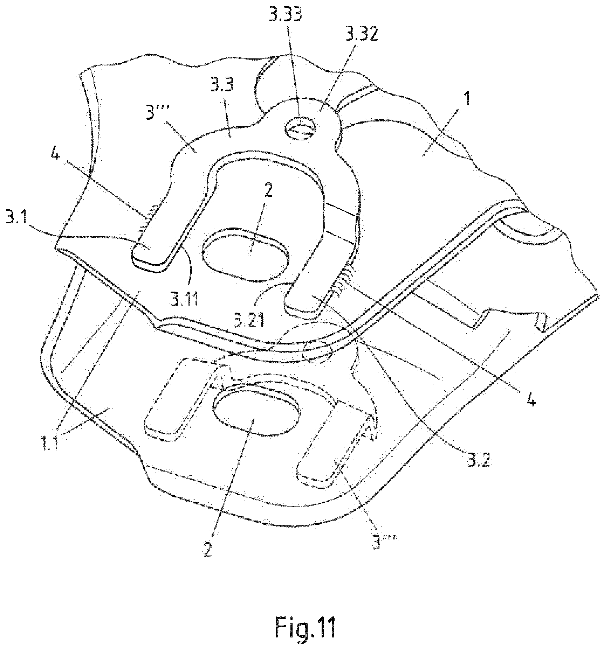

Fig. 11 is a perspective view of a section of a chassis component with an eccentric stop attached thereto according to a further embodiment of the invention; and

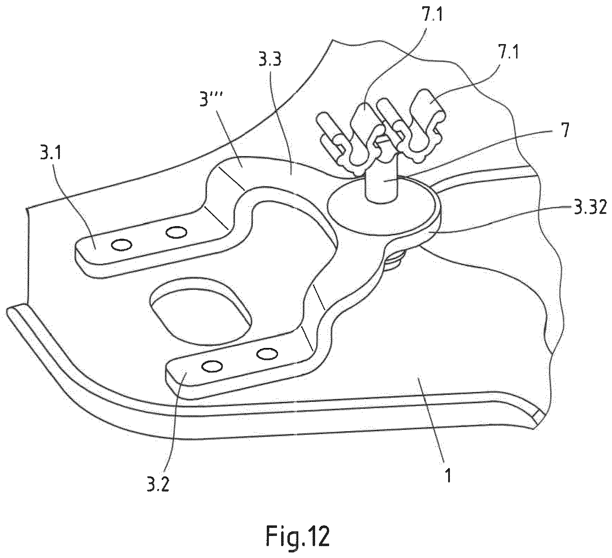

Fig. 12 is a perspective view of a section of a chassis component with an eccentric stop attached thereto according to a further embodiment of the invention.

Fig. 1 shows a section of a chassis component for a motor vehicle. The chassis component is, for example, an add-on part 1 in the form of a cross member or a subframe having a cross member (see Fig. 10). The chassis component has a mount 1.1, which is used for the movable, in particular pivotable mounting of a control arm (not shown here) for the suspension of a vehicle wheel. The end of the control arm connected to the mount 1.1 usually has two aligned bearing eyes in which a bearing bush is positively held. The bearing bush is usually designed as a rubber-metal bush.

The mount 1.1 or the add-on part 1 is made of sheet metal, preferably sheet steel, which has been formed into a specific component geometry. The add-on part 1 is preferably made of high-strength steel, e.g. multiphase or complex-phase steel, which has a tensile strength of at least 800 MPa and a yield strength of at least 680 MPa. The sheet thickness of the mount 1.1 or the add-on part 1 is, for example, in the range of from 1.5 mm to 3.5 mm, preferably in the range of from 1.5 mm to 2.5 mm.

The mount 1.1 is for example fork-shaped. Through-holes 2 are provided in spaced-apart portions or legs of the mount 1.1, which are aligned with each other and serve to accommodate a connecting bolt (not shown here) for connecting the control arm. The connecting bolt extends through the aforementioned bearing bush of the control arm so that the attachment bush sits rotatably on the connecting bolt. At least one of the aligned through holes 2 is designed as an oblong hole. Preferably, the mount 1.1 comprises at least two such through holes 2 designed as oblong holes to accommodate the connecting bolt. By adjusting, in particular moving, the connecting bolt along the longitudinal axis 2.1 of the oblong hole 2 or the oblong holes 2, the camber of the associated vehicle wheel, i.e. the inclination of the wheel plane to the vertical, and the track of the vehicle wheels can be adjusted via the control arm. For this purpose, the connecting bolt is provided with an eccentric disc (not shown), which is connected to it in a torsionally rigid manner. For example, the connecting bolt has a longitudinal groove in which the eccentric disc engages positively with a projection projecting radially inwards at its through opening. Alternatively, the eccentric disc and the connecting bolt can also be welded together.

The mount 1.1 has at least one stop for the eccentric disc, which is connected or can be connected in a torsionally rigid manner to the connecting bolt. The stop (eccentric stop) is formed from a metal part 3 manufactured separately from the mount 1.1, which is connected to the mount 1.1. The metal part 3 has at least two attachment portions 3.1, 3.2 which are formed in one piece with each other and which or of which two attachment portions (3.1, 3.2) have functional surfaces facing each other which serve as stop surfaces 3.11, 3.21 for the eccentric disc. The attachment portions 3.1, 3.2 are preferably elongated; the respective attachment portion 3.1, 3.2 is preferably longer than it is wide.

In the embodiment of the invention shown in Figures 1 to 3, it can be seen that the connecting portion 3.3, which integrally connects the attachment portions 3.1, 3.2 of the metal part (eccentric stop) 3 to one another, is formed (reshaped) or angled relative to the attachment portions 3.1, 3.2, so that the connecting portion 3.3 is at least partially spaced apart relative to the mount 1.1. The connecting portion 3.3 itself therefore has no direct contact with the mount 1.1 or the add-on part 1.

The metal part 3 is preferably essentially U-shaped, with the attachment portions 3.1, 3.2 being defined by legs of the U-shaped metal part 3. The metal part 3 shown in Figures 1 to 3 is cranked, for example, in such a way that the arcuate connecting portion 3.3 connecting the attachment portions 3.1, 3.2 to one another is at least partially offset relative to the attachment portions 3.1, 3.2. For example, the connecting portion 3.3 is partially offset parallel to the attachment portions 3.1, 3.2. In other words, the metal part 3 serving as an eccentric stop has a shoulder.

The attachment portions 3.1, 3.2 of the metal part 3 rest with contact on the mount, so that at least two contact surfaces 3.14, 3.25 result, while the connecting portion 3.3 connecting the attachment portions 3.1, 3.2 to one another has a free surface 3.31 on the underside at least partially facing the mount 1.1, which is larger than the sum of the contact surfaces 3.14, 3.25. The underside free surface 3.31 is, for example, at least 5%, preferably at least 10% larger than the sum of the said contact surfaces 3.14, 3.25. Furthermore, the respective attachment portion 3.1, 3.2 of the metal part 3 has a width B or average width B' which is, for example, at least twice, preferably at least three times larger than the thickness D of the metal part 3. In particular, the width B or average width B' of the respective attachment portion 3.1, 3.2 can be in the range from 8 mm to 20 mm, while its thickness D or the thickness D of the metal part 3 is in the range from 2.5 mm to 8 mm.

The metal part 3 serving as the eccentric stop is firmly connected to the add-on part 1 in that the attachment portions 3.1, 3.2 of the metal part 3 are preferably connected to the add-on part 1 by welded joints, for example fillet weld seams 4 on the mount 1.1 formed on the add-on part 1. The welded joints 4 are preferably arranged on edges of the attachment portions 3.1, 3.2 of the metal part 3 that face away from each other. Furthermore, it can be seen in Fig. 1 in conjunction with Fig. 4 that the respective fillet weld seam 4 is no longer than the maximum width B_{L} of the oblong hole 2. The long axis 2.1 of the oblong hole 2 defines a straight reference line, in the alignment of which the fillet weld seams 4 lie. The fillet weld seams 4 are preferably located between tangents T1, T2 of the oblong hole 2 that run parallel to the long axis 2.1 (see Fig. 4).

Since the connecting portion 3.3 of the metal part 3 is angled relative to the attachment portions 3.1, 3.2, the result is that the metal part 3 rests against the mount 1.1 or the add-on part 1 with a reduced contact surface, thus reducing the risk of corrosion. In order to further reduce the risk of corrosion, the metal part 3, which is firmly connected, preferably welded to the mount 1.1 of the add-on part 1, is provided with an anti-corrosion coating, for example a coating produced by extended cathodic dip coating. This coating is produced after the metal part 3 has been connected to the add-on part 1 on the mount 1.1.

Figures 4 and 5 show a further embodiment of the invention. In this example, the angled or offset connecting portion 3.3 of the metal part engages over or overlaps another component 5 connected to the add-on part (e.g. cross member) 1. In other words, in this case additional installation space is used, which is located under the offset or angled connecting portion 3.3 in the form of a shoulder of the eccentric stop. This installation space can be used for an arrangement or further connection of a component 5, for example a track rod bracket. The component 5, which is made of steel or another metal, for example, is preferably also welded to the add-on part 1, whereby the welded joint, for example a fillet weld seam 6, is located below the shoulder of the eccentric stop. The connecting portion 3.3 is angled or offset relative to the attachment portions 3.1, 3.2 of the metal part 3 to such an extent that it is not in direct contact with the component 5, but is at a distance from the latter.

The connecting portion 3.3 can be at least partially offset parallel to the attachment portions 3.1, 3.2 of the metal part 3, in the sense that the connecting portion 3.3 lies in a plane which at all points extends at essentially the same distance from another plane in which the attachment portions 3.1, 3.2 of the metal part 3 lie (see Figures 1, 2 and 5).

However, it is also within the scope of the invention that the connecting portion 3.3 is at least partially offset at an angle relative to the attachment portions 3.1, 3.2. In such a case, which is sketched in Fig. 9, the connecting portion 3.3 lies, for example, at least partially in a plane that runs at an angle to another plane in which the attachment portions 3.1, 3.2 of the metal part 3" lie. The two planes in question preferably run in such a way that they define an acute angle S with each other, whereby this angle S can be in the range of approx. 5° to 25°, particularly preferably in the range of approx. 8° to 15°. The radius of curvature R" of the bent areas of the metal part 3" can correspond more or less to the radius of curvature R of the bent areas 3.5, 3.6 of the metal part 3 as shown in Figures 1 to 3.

Figures 6 to 8 show a further embodiment of the invention. This embodiment differs from the embodiment shown in Figures 1 to 3 in that the connecting portion 3.3 is not angled several times relative to the attachment portions 3.1, 3.2 of the metal part 3', but is merely angled once. The connecting portion 3.3, which is angled relative to the attachment portions 3.1, 3.2, has an essentially flat surface on its side facing away from the mount 1.1 of the add-on part 1. Said flat surface is connected to the surfaces of the attachment portions 3.1, 3.2 facing away from the mount 1.1 via curved areas 3.5', 3.6' of the metal part 3'. In this embodiment, the connecting portion 3.3 lies essentially in a plane that runs inclined to the plane in which the attachment portions 3.1, 3.2 of the metal part 3 lie. The said planes in turn run in such a way that they define an obtuse angle A with each other, which can be in the range from approx. 130° to 175°, preferably in the range from approx. 140° to 160°, for example.

In the embodiment shown in Figures 6 to 8, the radius of curvature R' of the bent areas 3.5', 3.6' of the metal part 3' is significantly larger than that ( R) of the bent areas 3.5, 3.6 of the metal part 3 according to Figures 1 to 3. The radius of curvature R' of the bent areas 3.5', 3.6' of the eccentric stop according to the embodiment shown in Figures 6 to 8 is, for example, in the range of approx. 5 mm to 12 mm or in the range of 2.5 times to 6 times the thickness D or average thickness D of the metal part 3' or the attachment portions 3.1, 3.2, while the radius of curvature R of at least two bent areas 3.5, 3. 6 of the eccentric stop according to the embodiment shown in Figures 1 to 3 is, for example, in the range of approx. 2 mm to 4 mm or in the range of 0.8 times to 2 times the thickness D or average thickness D of the metal part 3 or the attachment portions 3.1, 3.2.

The embodiment shown in Fig. 11 differs from the embodiment shown in Fig. 1 in that the connecting portion 3.3, which is angled or offset relative to the attachment portions 3.1, 3.2, has a fastening structure 3.32, for example in the form of a lug or eyelet, wherein the fastening structure 3.32 is preferably provided with a fastening opening 3.33, for example a fastening hole. The fastening structure 3.32 can be formed at any point of the connecting portion 3.3. Preferably, the fastening structure 3.32 or the fastening opening 3.33 is located in a central length range or arc length range of the connecting portion 3.3.

A fastening means 7 is mounted or connected to the fastening structure 3.32 or fastening opening 3.33 for fastening one or more lines. The fastening means can be, for example, a mount, a clip, an expanding rivet or a rivet nut. A line to be fastened to the fastening means 7 can be a pneumatic, hydraulic or electrical line, for example. Fig. 12 shows an embodiment in which the fastening means 7 is designed in the form of a clip or expanding rivet, which is provided at one end with one or more clamping elements 7.1 for fixing one or more lines (not shown).

Furthermore, it is outlined in Fig. 12 that an eccentric stop (metal part 3‴) according to the invention can also be connected to the add-on part 1 in a material-locking manner by a welding other than a fillet welding, for example by means of resistance welding, in particular projection welding.

The execution of the invention is not limited to the embodiments shown in the drawing. Rather, numerous variants are conceivable which make use of at least one of the embodiments of the invention specified in the appended claims, even if the design differs from the examples shown.

## Claims

1. Chassis component for a motor vehicle, in particular as an add-on part (1), having a mount (1.1) which has at least one oblong hole (2) for receiving a connecting bolt for connecting a control arm and at least one stop for an eccentric disc which is connected or can be connected in a torsionally rigid manner to the connecting bolt, the stop being formed from a metal part (3, 3', 3", 3‴) which is produced separately from the mount (1. 1), which is connected to the mount (1.1) and has at least two spaced-apart attachment portions (3. 1, 3.2) and a connecting portion (3.3, 3.3') connecting the attachment portions (3.1, 3.2) to one another in one piece, wherein the or at least two of the attachment portions (3.1, 3.2) define stop surfaces (3.11, 3.21) for the eccentric disc, **characterized in that** the connecting portion (3.3, 3.3') is formed relative to the attachment portions (3.1, 3.2), preferably angled or offset, so that the connecting portion (3.3, 3.3') is at least partially spaced relative to the mount (1.1).

2. Chassis component according to claim 1, **characterized in that** the connecting portion (3.3, 3.3') is at least partially spaced apart relative to the mount (1.1) by a distance which is greater than the thickness (D) of the metal part (3, 3', 3", 3‴), preferably at least 1.5 times, particularly preferably at least 2 times, the thickness (D) of the metal part (3, 3').

3. Chassis component according to claim 1 or 2, **characterized in that** the metal part (3, 3', 3", 3‴) is essentially U-shaped, the attachment portions (3.1, 3.2) being defined by legs of the U-shaped metal part (3, 3', 3", 3‴).

4. Chassis component according to any one of claims 1 to 3, **characterized in that** the connecting portion (3.3') is single-angled relative to the attachment portions (3.1, 3.2), the connecting portion (3.3') preferably defining with the attachment portions (3.1, 3.2) an obtuse angle (A) which is in the range from 130° to 175°, preferably in the range from 140° to 160°.

5. Chassis component according to claim 4, **characterized in that** the connecting portion (3.3') has a flat surface on its side facing away from the mount (1.1), which is connected via curved regions (3.5', 3.6') of the metal part (3') to the surfaces of the attachment portions (3.1, 3.2) facing away from the mount (1.1).

6. Chassis component according to any one of claims 1 to 3, **characterized in that** the metal part (3, 3", 3‴) is cranked so that the connecting portion (3.3) is at least partially offset relative to the attachment portions (3.1, 3.2).

7. Chassis component according to claim 6, **characterized in that** the connecting portion (3.3) is at least partially offset in parallel relative to the attachment portions (3.1, 3.2).

8. Chassis component according to claim 6, **characterized in that** the connecting portion (3.3) is at least partially offset at a slant angle relative to the attachment portions (3.1, 3.2).

9. Chassis component according to any one of claims 1 to 8, **characterized in that** the attachment portions (3.1, 3.2) rest with contact on the mount (1.1), so that at least two contact surfaces (3.14, 3.25) result, the connecting portion (3.3) having an underside free surface (3.31) at least partially facing the mount (1.1), which is larger than the sum of the contact surfaces (3.14, 3.25).

10. Chassis component according to any one of claims 1 to 9, **characterized in that** the respective attachment section (3.1, 3.2) of the metal part (3, 3', 3", 3‴) has a width (B) or average width (B') which is at least twice, preferably at least three times, greater than the thickness (D) of the metal part (3, 3', 3", 3‴).

11. Chassis component according to any one of claims 1 to 10, **characterized in that** the attachment portions (3.1, 3.2) of the metal part (3, 3', 3") are connected to the mount (1.1) by fillet weld seams (4), the fillet weld seams (4) being arranged on edges of the attachment portions (3.1, 3.2) facing away from each other.

12. Chassis component according to claim 11, **characterized in that** the respective fillet weld seam (4) is no longer than the maximum width (BL) of the oblong hole (2), the long axis (2.1) of the oblong hole (2) defining a straight reference line in the alignment of which the fillet weld seams (4) lie, and the fillet weld seams (4) preferably lying between tangents (T1, T2) of the oblong hole (2) running parallel to the long axis (2.1).

13. Chassis component according to any one of claims 1 to 12, **characterized in that** the metal part (3, 3', 3", 3‴) connected to the mount (1.1) has a coating produced by cathodic dip painting, the coating having been produced after the metal part (3, 3', 3", 3‴) has been connected to the mount (1.1).

14. Chassis component according to any one of claims 1 to 13, **characterized in that** the connecting portion (3.3) of the metal part (3) engages over another component (5), preferably metal part, connected to the mount (1.1).

15. Chassis component according to any one of claims 1 to 14, **characterized in that** the connecting portion (3.3) has a fastening structure (3.32) which is prepared for fixing or connecting a fastening means (7) for fastening one or more lines.

## Patentansprüche

1. Fahrwerkskomponente für ein Kraftfahrzeug, insbesondere als Anbauteil (1), mit einer Halterung (1.1), die mindestens ein Langloch (2) zur Aufnahme eines Verbindungsbolzens zum Verbinden eines Querlenkers und mindestens einen Anschlag für eine Exzenterscheibe aufweist, die mit dem Verbindungsbolzen drehfest verbunden ist oder verbunden werden kann, wobei der Anschlag aus einem Metallteil (3, 3', 3", 3‴) gebildet ist, das separat von der Halterung (1.1) hergestellt ist, mit der Halterung (1.1) verbunden ist und mindestens zwei voneinander beabstandete Befestigungsabschnitte (3.1, 3.2) und einen die Befestigungsabschnitte (3.1, 3.2) miteinander verbindenden Verbindungsabschnitt (3.3, 3.3') aufweist, wobei der oder mindestens zwei der Befestigungsabschnitte (3.1, 3.2) Anschlagflächen (3.11, 3.21) für die Exzenterscheibe bilden, **dadurch gekennzeichnet, dass** der Verbindungsabschnitt (3.3, 3.3') relativ zu den Befestigungsabschnitten (3.1, 3.2), vorzugsweise abgewinkelt oder versetzt, ausgebildet ist, so dass der Verbindungsabschnitt (3.3, 3.3') zumindest teilweise relativ zur Halterung (1.1) beabstandet ist.

2. Fahrwerkskomponente nach Anspruch 1, **dadurch gekennzeichnet, dass** der Verbindungsabschnitt (3.3, 3.3') zumindest teilweise relativ zur Halterung (1.1) um einen Abstand beabstandet ist, der größer ist als die Dicke (D) des Metallteils (3, 3', 3", 3"'), vorzugsweise mindestens das 1,5-fache, besonders bevorzugt mindestens das 2-fache der Dicke (D) des Metallteils (3, 3', 3").

3. Fahrwerkskomponente nach Anspruch 1 oder 2, **dadurch gekennzeichnet, dass** das Metallteil (3, 3', 3", 3"') im Wesentlichen U-förmig ist, wobei die Befestigungsabschnitte (3.1, 3.2) durch Schenkel des U-förmigen Metallteils (3, 3', 3", 3"') definiert sind.

4. Fahrwerkskomponente nach einem der Ansprüche 1 bis 3, **dadurch gekennzeichnet, dass** der Verbindungsabschnitt (3.3') relativ zu den Befestigungsabschnitten (3.1, 3.2) einseitig abgewinkelt ist, wobei der Verbindungsabschnitt (3.3') vorzugsweise mit den Befestigungsabschnitten (3.1, 3.2) einen stumpfen Winkel (A) bildet, der im Bereich von 130° bis 175°, vorzugsweise im Bereich von 140° bis 160°, liegt.

5. Fahrwerkskomponente nach Anspruch 4, **dadurch gekennzeichnet, dass** der Verbindungsabschnitt (3.3') auf seiner von der Halterung (1.1) abgewandten Seite eine ebene Fläche aufweist, die über gekrümmte Bereiche (3.5', 3.6') des Metallteils (3') mit den von der Halterung (1.1) abgewandten Flächen der Befestigungsabschnitte (3.1, 3.2) verbunden ist.

6. Fahrwerkskomponente nach einem der Ansprüche 1 bis 3, **dadurch gekennzeichnet, dass** das Metallteil (3, 3", 3‴) so gekröpft ist, dass der Verbindungsabschnitt (3.3) zumindest teilweise gegenüber den Befestigungsabschnitten (3.1, 3.2) versetzt ist.

7. Fahrwerkskomponente nach Anspruch 6, **dadurch gekennzeichnet, dass** der Verbindungsabschnitt (3.3) zumindest teilweise parallel zu den Befestigungsabschnitten (3.1, 3.2) versetzt ist.

8. Fahrwerkskomponente nach Anspruch 6, **dadurch gekennzeichnet, dass** der Verbindungsabschnitt (3.3) zumindest teilweise in einem Schrägwinkel relativ zu den Befestigungsabschnitten (3.1, 3.2) versetzt ist.

9. Fahrwerkskomponente nach einem der Ansprüche 1 bis 8, **dadurch gekennzeichnet, dass** die Befestigungsabschnitte (3.1, 3.2) mit Kontakt auf der Halterung (1.1) aufliegen, so dass mindestens zwei Kontaktflächen (3.14, 3.25) entstehen, wobei der Verbindungsabschnitt (3.3) eine der Halterung (1.1) zumindest teilweise zugewandte freie Unterseite (3.31) aufweist, die größer ist als die Summe der Kontaktflächen (3.14, 3.25).

10. Fahrwerkskomponente nach einem der Ansprüche 1 bis 9, **dadurch gekennzeichnet, dass** der jeweilige Befestigungsabschnitt (3.1, 3.2) des Metallteils (3, 3', 3", 3"') eine Breite (B) oder eine durchschnittliche Breite (B') aufweist, die mindestens doppelt so groß, vorzugsweise mindestens dreimal so groß ist wie die Dicke (D) des Metallteils (3, 3', 3", 3"').

11. Fahrwerkskomponente gemäß einem der Ansprüche 1 bis 10, **dadurch gekennzeichnet, dass** die Befestigungsabschnitte (3.1, 3.2) des Metallteils (3, 3', 3") durch Kehlnähte (4) mit der Halterung (1.1) verbunden sind, wobei die Kehlnähte (4) an voneinander abgewandten Kanten der Befestigungsabschnitte (3.1, 3.2) angeordnet sind.

12. Fahrwerkskomponente nach Anspruch 11, **dadurch gekennzeichnet, dass** die jeweilige Kehlnaht (4) nicht länger ist als die maximale Breite (BL) des Langlochs (2), wobei die Längsachse (2.1) des Langlochs (2) eine gerade Bezugslinie definiert, in deren Ausrichtung die Kehlnähte (4) liegen, und die Kehlnähte (4) vorzugsweise zwischen Tangenten (T1, T2) des Langlochs (2) liegen, die parallel zur Längsachse (2.1) verlaufen.

13. Fahrwerkskomponente nach einem der Ansprüche 1 bis 12, **dadurch gekennzeichnet, dass** das mit der Halterung (1.1) verbundene Metallteil (3, 3', 3", 3‴) eine durch kathodische Tauchlackierung hergestellte Beschichtung aufweist, wobei die Beschichtung hergestellt wurde, nachdem das Metallteil (3, 3', 3", 3"') mit der Halterung (1.1) verbunden wurde.

14. Fahrwerkskomponente gemäß einem der Ansprüche 1 bis 13, **dadurch gekennzeichnet, dass** der Verbindungsabschnitt (3.3) des Metallteils (3) über ein anderes Bauteil (5), vorzugsweise ein Metallteil, greift, das mit der Halterung (1.1) verbunden ist.

15. Fahrwerkskomponente nach einem der Ansprüche 1 bis 14, **dadurch gekennzeichnet, dass** der Verbindungsabschnitt (3.3) eine Befestigungsstruktur (3.32) aufweist, die zum Befestigen oder Verbinden eines Befestigungsmittels (7) zum Befestigen einer oder mehrerer Leitungen vorbereitet ist.

## Revendications

1. Composant de châssis pour un véhicule à moteur, en particulier sous forme de pièce rapportée (1), comportant un support (1.1) qui présente au moins un trou oblong (2) destiné à recevoir un boulon de liaison pour relier un bras de suspension et au moins une butée pour un disque excentrique qui est relié ou peut être relié de manière rigide en torsion au boulon de liaison, la butée étant formée à partir d'une pièce métallique (3, 3', 3", 3‴) qui est fabriquée séparément du support (1. 1), qui est reliée au support (1.1) et qui comporte au moins deux parties de fixation espacées (3.1, 3.2) et une partie de raccordement (3.3, 3.3') reliant les parties de fixation (3.1, 3.2) l'une à l'autre en une seule pièce, dans laquelle la ou au moins deux des parties de fixation (3.1, 3.2) définissent des surfaces d'arrêt (3.11, 3.21) pour le disque excentrique, **caractérisé en ce que** la partie de raccordement (3.3, 3.3') est formée par rapport aux parties de fixation (3.1, 3.2), de préférence en angle ou décalée, de sorte que la partie de raccordement (3.3, 3.3') est au moins partiellement espacée par rapport au support (1.1).

2. Composant de châssis selon la revendication 1, **caractérisé en ce que** la partie de raccordement (3.3, 3.3') est au moins partiellement espacée par rapport au support (1.1) d'une distance qui est supérieure à l'épaisseur (D) de la pièce métallique (3, 3', 3", 3"), de préférence au moins 1,5 fois, notamment de préférence au moins 2 fois, l'épaisseur (D) de la pièce métallique (3, 3').

3. Composant de châssis selon la revendication 1 ou 2, **caractérisé en ce que** la pièce métallique (3, 3', 3", 3‴) est essentiellement en forme de U, les parties de fixation (3.1, 3.2) étant définies par les branches de la pièce métallique en forme de U (3, 3', 3", 3"').

4. Composant de châssis selon l'une quelconque des revendications 1 à 3, **caractérisé en ce que** la partie de raccordement (3.3') est à angle unique par rapport aux parties de fixation (3.1, 3.2), la partie de raccordement (3.3') définissant de préférence avec les parties de fixation (3.1, 3.2) un angle obtus (A) compris entre 130° et 175°, de préférence entre 140° et 160°.

5. Composant de châssis selon la revendication 4, **caractérisé en ce que** la partie de raccordement (3.3') présente, sur son côté opposé au support (1.1), une surface plane qui est reliée, par l'intermédiaire de zones courbes (3.5', 3.6') de la pièce métallique (3'), aux surfaces des parties de fixation (3.1, 3.2) opposées au support (1.1).

6. Composant de châssis selon l'une quelconque des revendications 1 à 3, **caractérisé en ce que** la pièce métallique (3, 3", 3"') est coudée de telle sorte que la partie de raccordement (3.3) est au moins partiellement décalée par rapport aux parties de fixation (3.1, 3.2).

7. Composant de châssis selon la revendication 6, **caractérisé en ce que** la partie de raccordement (3.3) est au moins partiellement décalée parallèlement par rapport aux parties de fixation (3.1, 3.2).

8. Composant de châssis selon la revendication 6, **caractérisé en ce que** la partie de raccordement (3.3) est au moins partiellement décalée selon un angle d'inclinaison par rapport aux parties de fixation (3.1, 3.2).

9. Composant de châssis selon l'une quelconque des revendications 1 à 8, **caractérisé en ce que** les parties de fixation (3.1, 3.2) reposent en contact sur le support (1.1), de sorte qu'il en résulte au moins deux surfaces de contact (3.14, 3.25), la partie de raccordement (3.3) présentant une surface libre inférieure (3.31) au moins partiellement tournée vers le support (1.1), qui est supérieure à la somme des surfaces de contact (3.14, 3.25).

10. Composant de châssis selon l'une quelconque des revendications 1 à 9, **caractérisé en ce que** la partie de fixation respective (3.1, 3.2) de la pièce métallique (3, 3', 3", 3"') a une largeur (B) ou largeur moyenne (B') qui est au moins deux fois, de preference au moins trois fois supérieure à l'épaisseur (D) de la pièce métallique (3, 3', 3", 3‴).

11. Composant de châssis selon l'une quelconque des revendications 1 à 10, **caractérisé en ce que** les parties de fixation (3.1, 3.2) de la pièce métallique (3, 3', 3") sont reliées au support (1.1) par des soudures d'angle (4), les soudures d'angle (4) étant disposées à bords des parties de fixation (3.1, 3.2) opposés les uns aux autres.

12. Composant de châssis selon la revendication 11, **caractérisé en ce que** la soudure d'angle (4) respectif n'est pas plus long que la largeur maximale (BL) du trou oblong (2), le grand axe (2.1) du trou oblong (2) définissant une ligne de référence droite dans l'alignement desquelles se trouvent les soudures d'angle (4), et les soudures d'angle (4) se trouvant de préférence entre les tangentes (T1, T2) du trou oblong (2) s'étendant parallèlement à l'axe longitudinal (2.1).

13. Composant de châssis selon l'une quelconque des revendications 1 à 12, **caractérisé en ce que** la partie métallique (3, 3', 3", 3"') reliée au support (1.1) comporte un revêtement réalisé par peinture cathodique par immersion, le revêtement ayant été produit après que la partie métallique (3, 3', 3", 3 ‴) a été reliée au support (1.1).

14. Composant de châssis selon l'une quelconque des revendications 1 à 13, **caractérisé en ce que** la partie de raccordement (3.3) de la partie métallique (3) s'engage sur un autre composant (5), de préférence une pièce métallique, relié au support (1.1).

15. Composant de châssis selon l'une quelconque des revendications 1 à 14, **caractérisé en ce que** la partie de raccordement (3.3) comporte une structure de fixation (3.32) qui est préparée pour fixer ou connecter un moyen de fixation (7) pour fixer une ou plusieurs lignes.
